# EUROPÄISCHE PATENTSCHRIFT

(11) **EP 0 935 716 B1**
(45) Veröffentlichungstag und Bekanntmachung des Hinweises auf die Patenterteilung: **23.01.2002**
(21) Anmeldenummer: 97945765.2
(22) Anmeldetag: 20.10.1997
(51) Int. Cl.: F15B 13/01

(54) **RÜCKSCHLAGVENTILANORDNUNG**
CHECK VALVE
SYSTEME DE VALVE ANTI-RETOUR

(30) Priorität: 11.11.1996 DE 29622693 U; 08.08.1997 DE 19734479
(43) Veröffentlichungstag der Anmeldung: 18.08.1999
(73) Patentinhaber: Mannesmann Rexroth AG, 97816 Lohr am Main (DE)
(72) Erfinder: KNÖLL, Burkhard, D-97816 Lohr (DE); RÜB, Winfried, D-97845 Neustadt (DE)
(74) Vertreter: Winter, Brandl, Fürniss, Hübner, Röss, Kaiser, Polte Partnerschaft
(86) Internationale Anmeldenummer: DE9702422
(87) Internationale Veröffentlichungsnummer: WO9821486

(56) Entgegenhaltungen:
- EP-A- 0 163 771
- DE-A- 2 618 641
- DE-A- 2 735 559
- DE-A- 3 941 802
- DE-A- 4 436 548
- DE-C- 3 319 810
- FR-A- 2 362 290
- PARO, J.: "Rem en balanceerkleppen in hydraulische systemen" PT/WERKTUIGBOUW, Bd. 42, Nr. 3, März 1987, NL-RIJSWIJK, Seiten 105-107, XP002057743

## Beschreibung

Die Erfindung betrifft eine Rückschlagventilanordnung gemäß dem Oberbegriff des Patentanspruchs 1 und eine mit einer derartigen Rückschlagventilanordnung versehene Ventilanordnung.

In der Mobilhydraulik werden derartige Ventilanordnungen unter anderem zur Ansteuerung von doppeltwirkenden Druckzylindern eingesetzt, wie sie beispielsweise als Frontkraftheber oder Heckkraftheber von Ackerschleppern verwendet werden. Durch diese Kraftheber lassen sich unterschiedliche Peripheriegeräte, wie beispielsweise Mähwerke, Packer, Pflüge, Grubber, Walzen etc. betreiben.

Bei bestimmten Betriebsbedingungen kann es vorkommen, daß eine Last im angehobenen Zustand gehalten werden muß, wobei dieser Zustand auch bei einer abgeschalteten Hydraulikversorgung aufrecht erhalten werden soll. So muß beispielsweise ein Mähwerk während der Anfahrt des Ackerschleppers zu der zu mähenden Wiese oder beim Abstellen auf dem Hof im angehobenen Zustand festgelegt werden.

Üblicherweise werden die Kraftheber über Proportionalventile angesteuert, die eine Nullstellung aufweisen, in der die zum Kraftheber führenden Arbeitsleitungen und eine Pumpenleitung abgesperrt sind. Derartige Proportionalventile sind jedoch in der Regel als Schieberventile ausgeführt, so daß keine leckölfreie Absperrung des Hydraulikfluids in den Arbeitsleitungen möglich ist. Daher werden in den Arbeitsleitungen entsperrbare Rückschlagventile vorgesehen, über die das Hydraulikfluid zwischen dem Verbraucher und dem Rückschlagventil leckölfrei einsperrbar ist. Durch Entsperren des Rückschlagventils wird eine Rückströmung des Hydraulikfluids zum Proportionalventil ermöglicht.

In der DE 27 35 559 C2 ist eine gattungsgemäße Ventilanordnung gezeigt, bei der ein Hauptkegel mit Hilfe eines Aufstoßkolbens zur Entriegelung aufsteuerbar ist. Der Hauptkolben ist mit einer Voröffnung ausgeführt, die durch einen Schließkörper verschlossen ist. Dieser kann durch Ansteuerung des Aufstoßkolbens über einen Stößel in seine Öffnungsstellung gebracht werden, so daß die Federseite des Hauptkegels entlastet wird und der Hauptkegel durch den an seinen Differentialflächen anliegenden Lastdruck aufgesteuert wird. Gleichzeitig steuert der Aufstoßkolben einen Tankanschluß auf, so daß das Hydraulikfluid vom Verbraucher am abgehobenen Hauptkegel vorbei zum Tank T strömen kann, ohne daß es einer Rückführung zu einem Steuerwegeventil bedarf, das der Rückschlagventilanordnung vorgeschaltet ist. Über die bekannte Kombination aus Steuerwegeventil und Rückschlagventilanordnung läßt sich lediglich ein einfach wirkender Hubzylinder anschließen, dessen Zylinderraum wahlweise über das Steuerventil mit einer Pumpe oder über den Aufstoßkolben mit dem Tank T verbindbar ist.

Bei abgehobenem Schließkörper wird der Hauptkegel aufgrund seiner Flächendifferenz schlagartig aufgesteuert, so daß das Hydraulikfluid relativ schnell zum Tank hin entspannt wird, ohne daß eine Beeinflussung der Rückströmgeschwindigkeit möglich ist.

In der DE-44 36 548 A1 ist eine Ventilanordnung zur Ansteuerung von doppelt wirkenden Hubzylindern gezeigt, bei der in jeder Arbeitsleitung eine Rückschlagventilanordnung geschaltet ist. Diese enthält wiederum einen Hauptkegel, der mit Flächendifferenz ausgeführt ist (d.h., der Ventilsitzdurchmesser ist kleiner als der wirksame Außendurchmesser des Hauptkegels), der durch einen Aufstoßkolben aufsteuerbar ist. Durch diese Ventilanordnung kann zwar ein doppelt wirkender Verbraucher angesteuert werden, da der Hauptkegel jedoch wieder mit Flächendifferenz ausgeführt ist, wird der Hauptkegel unmittelbar nach dem Abheben von seinem Ventilsitz schlagartig in seine Öffnungsstellung aufgesteuert, so daß sofort ein maximaler Strömungsquerschnitt zur Verfügung gestellt wird. Auch bei dieser bekannten Ventilanordnung ist eine Beeinflussung der Rückströmung nicht möglich.

Demgegenüber liegt der Erfindung die Aufgabe zugrunde, eine Rückschlagventilanordnung und eine Ventilanordnung mit einer derartigen Rückschlagventilanordnung zu schaffen, mit denen bei minimalem Schaltungsaufwand die Rückströmung des Hydraulikfluids vom Verbraucher steuerbar ist.

Diese Aufgabe wird hinsichtlich der Rückschlagventilanordnung durch die Merkmale des Patentanspruchs 1 und hinsichtlich der Ventilanordnung durch die Merkmale des Patentanspruchs 12 gelöst.

Durch die Maßnahme, den Hauptkegel ohne Flächendifferenz auszuführen und den Aufsteuervorgang durch Anlage des Aufstoßkolbens zu bestimmen, kann ein schlagartiges Aufreißen des Hauptkegels verhindert werden. Der Öffnungshub des Hauptkegels läßt sich dann durch geeignete Ansteuerung des Aufstoßkolbens beeinflussen, so daß der Volumenstrom des rückströmenden Hydraulikfluids regelbar ist (Ablaufregelung).

Der Hauptkegel ist üblicherweise durch eine Feder gegen seinen Ventilsitz vorgespannt. Bei einem erfindungsgemäßen Ausführungsbeispiel wirkt diese Feder einerseits als Rückschlagventilfeder, um den Zulauf zum Verbraucher zu ermöglichen und andererseits als Steuerfeder, um den Rücklauf vom Verbraucher zum Tank bei entsperrtem Rückschlagventil zu steuern. Als Rückschlagventilfeder sollte diese Feder eine geringe Federkonstante haben und relativ schwach ausgelegt sein, damit über das Rückschlagventil keine großen Druckverluste auftreten. Als Steuerfeder sollte diese Feder dagegen eine steilere Kennlinie aufweisen, um ein gutes Ansprechverhalten bei der Laufsteuerung zu zeigen. In der Regel geht man dabei einen Kompromiß dahingehend ein, daß die Feder mit vergleichsweiser hoher Federkonstante ausgelegt wird und dabei die höheren Druckverluste in der Rückschlagfunktion in Kauf nimmt. Dieser Nachteil läßt sich überwinden, indem anstelle einer einzigen Feder eine Rückschlagfeder und eine Steuerfeder sozusagen in Reihe hintereinander geschaltet werden, so daß eine vergleichsweise schwach ausgelegte Rückschlagfeder die Rückschlagfunktion bestimmt, während eine Steuerfeder mit steiler Federkennlinie erst nach einer vorbestimmten Axialbewegung des Hauptkegels in Eingriff gelangt, um den auf den Aufstoßkolben wirkenden Steuerdruck zu regeln.

Bei einer konstruktiv vorteilhaften Variante wird ein Ende der Steuerfeder an einem gehäusefesten Federteller abgestützt und nach einem vorbestimmten Hub des Hauptkegels in Anlage an eine innere Ringstirnfläche des Hauptkegels gebracht, so daß dessen weitere Öffnungsbewegung gegen die Kraft der Steuerfeder erfolgt.

Die Federseite des Hauptkegels läßt sich durch eine Verbindungsbohrung im Aufstoßkolben mit dem Tank verbinden. Diese wird während der Axialbewegung des Aufstoßkolbens aufgesteuert, so daß der Federraum des Hauptkegels zum Tank hin entlastet wird und somit leichter von seinem Ventilsitz abhebbar ist.

Die Baulänge läßt sich minimieren, wenn der Hauptkegel mit einem nabenförmigen Vorsprung ausgeführt ist, in den ein Stößel des Aufstoßkolbens eintaucht, um den Schließkörper der Voröffnung abzuheben. Die Ringstirnfläche des nabenförmigen Vorsprungs dient als Anlagefläche für die benachbarte Stirnseite des Aufstoßkolbens. Diese Anlageflächen sind derart bearbeitet, daß sie dichtend aneinanderliegen, so daß der Innenraum des nabenförmigen Vorsprungs und der Außenumfang des Hauptkegels gegeneinander abgedichtet sind, so daß bei aufgesteuerter Verbindungsbohrung kein Druckausgleich zwischen dem am Ventilsitz herrschenden und dem an der Voröffnung herrschenden Druck stattfinden kann.

Wie bereits vorstehend ausgeführt wurde, liegt der Aufstoßkolben an einer Ringstirnfläche des Hauptkegels an. Durch eine Radialerweiterung des nabenförmigen Vorsprungs im Bereich der Ringstirnfläche auf einen Durchmesser, der größer als der Sitzdurchmesser des Hauptkegels ist und entsprechende Vergrößerung der Ringstirnfläche werden der Aufstoßkolben und der Hauptkegel durch die resultierenden Druckkräfte gegeneinander gedrückt, so daß eine dichtende Anlage des Aufstoßkolbens und damit eine optimale Ablaufsteuerung gewährleistet ist.

Um die Montage des radial vorspringenden Teils des nabenförmigen Vorsprungs zu ermöglichen, wird der Hauptkegel bei diesem Ausführungsbeispiel vorteilhafterweise in einer in das Ventilgehäuse eingeschraubten Buchse gelagert, deren Außendurchmesser größer als der radial vorspringende Teil des nabenförmigen Vorsprungs ist.

Die Aufsteuerung des Tankanschlusses erfolgt zusätzlich zur Verbindungsbohrung über Ausnehmungen, über die ein Raum stromabwärts (in Rückströmrichtung gesehen) des Hauptkegelsitzes mit dem Tank verbindbar ist.

Die Ablaufregelung läßt sich besonders fein variieren, indem der Aufstoßkolben über ein Pilotventil vorgesteuert wird.

In der Ausgangsstellung ist ein Spalt zwischen den einander gegenüberliegenden Stirnseiten des Hauptkegels und des Aufstoßkolbens ausgebildet, der größer ist als der Abstand des Stößels des Aufstoßkolbens zum Schließkörper. Durch diese Maßnahme ist gewährleistet, daß der Schließkörper zuerst aufgesteuert wird, bevor der Aufstoßkolben auf den Hauptkegel aufläuft.

Da bei der erfindungsgemäßen Rückschlagventilanordnung eine Verbindung vom Verbraucher zum Tank herstellbar ist, können die davor geschalteten Steuerventile zur Ansteuerung des Verbrauchers einfacher ausgeführt werden, da über letztere keine Verbindung zum Tank hergestellt werden muß.

Die mit einer erfindungsgemäßen Rückschlagventilanordnung versehenen Ventilanordnungen werden besonders vorteilhaft bei der Ansteuerung von doppeltwirkenden Zylindern eingesetzt, wobei jeder Arbeitsleitung zum Zylinder eine eigene Rückschlagventilanordnung zugeordnet ist. Diese werden über jeweils ein Pilotventil vorgesteuert, über das auch eine Steuerseite des Ventilschiebers des vorgeschalteten Wegeventils angesteuert ist, um den Hydraulikfluidstrom zu einem der Zylinderräume zu leiten.

Durch Bestromung in eines der Pilotventile wird der Ventilschieber in eine Arbeitsstellung gebracht, in der das Hydraulikfluid durch die eine Rückschlagventilanordnung zum Verbraucher geführt ist, während das verdrängte Hydraulikfluid vom Verbraucher zur anderen Rückschlagventilanordnung zurückströmt, die durch den Steuerdruck des Pilotventils entsperrt ist, so daß das Hydraulikfluid über die Rückschlagventilanordnung zum Tank strömen kann.

Die verwendeten Pilotventile sind vorzugsweise Druckminderventile in Patronenbauweise.

Sonstige vorteilhafte Weiterbildungen der Erfindung sind Gegenstand der weiteren Unteransprüche.

Bevorzugte Ausführungsbeispiele der Erfindung werden im folgenden anhand schematischer Zeichnungen näher erläutert. Es zeigen:
- **Fig. 1**: ein erstes Ausführungsbeispiel einer Ventilanordnung mit einem Wegeventil und einer Rückschlagventilanordnung, die über ein Pilotventil ansteuerbar sind,
- **Fig. 2**: eine Detaildarstellung des Wegeventils und einer Rückschlagventilanordnung aus Fig. 1,
- **Fig. 3**: einen schematischen Schaltplan der Ventilanordnung aus Fig. 1,
- **Fig. 4**: ein zweites Ausführungsbeispiel einer Ventilanordnung und
- **Fig. 5**: eine Rückschlagventilanordnung 8 der Ventilanordnung aus Fig. 4.

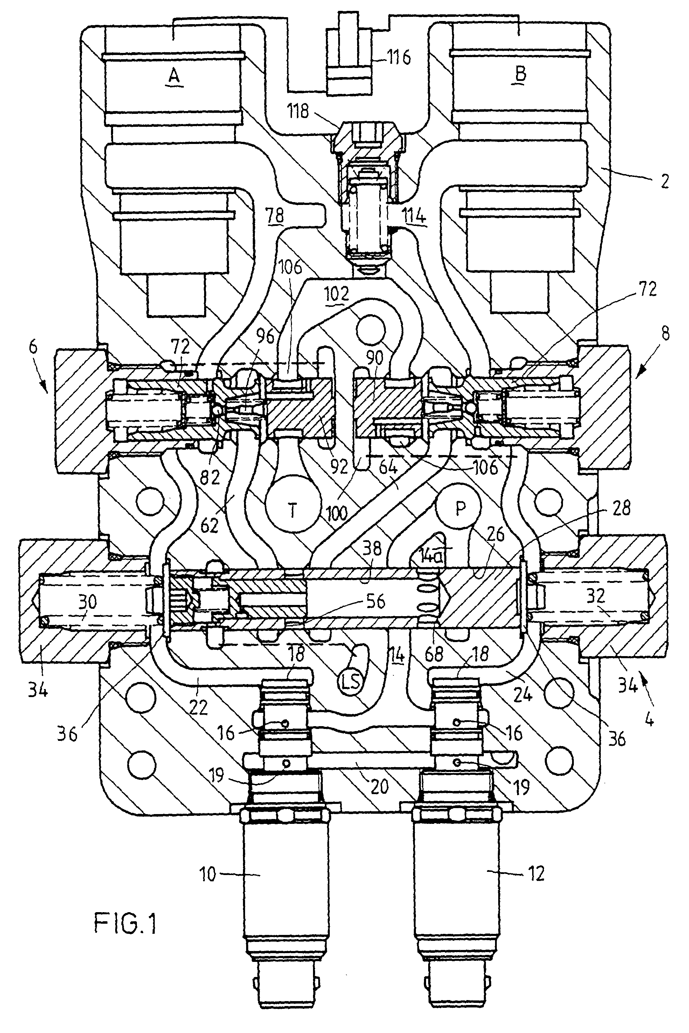

Fig. 1 zeigt eine Schnittdarstellung durch eine Ventilanordnung, die in Scheibenbauweise ausgeführt ist. Die Ventilscheibe oder -platte bildet ein Ventilgehäuse 2, in dem Aufnahmebohrungen für ein stetig verstellbares Wegeventil 4 und zwei Rückschlagventilanordnungen 6, 8 ausgebildet sind.

Die beiden Rückschlagventilanordnungen 6, 8 sind entlang einer gemeinsamen Achse angeordnet, die im Parallelabstand zur Achse des Wegeventils 4 verläuft.

In das Ventilgehäuse 2 sind desweiteren noch zwei Pilotventile 10, 12 in Patronenbauweise eingeschraubt, über die das Wegeventil 4 und die beiden Rückschlagventilanordnungen 6, 8 ansteuerbar sind. Bei diesen Pilotventilen 10, 12 handelt es sich beispielsweise um elektrisch betätigbare Druckminderventile, über die der Druck an einem Pumpenanschluß P, der über einen Pumpenkanal 14 zu Radialanschlüssen 16 der Pilotventile 10, 12 geführt ist, auf einen Systemdruck am axialen Ausgangsanschluß 18 des jeweiligen Pilotventils 10, 12 reduzierbar ist. Jedes Pilotventil 10, 12 hat desweiteren noch einen Radialanschluß 19, der in einen Tankkanal 20 mündet, über den überschüssiges Hydraulikfluid zu einem Tankanschluß T zurückführbar ist.

Der Ausgangsanschluß 18 jedes Pilotventils 10, 12 mündet in einen Steuerkanal 22 bzw. 24, die in einer Ventilbohrung 26 münden, in der ein Ventilschieber 28 des Wegeventils 4 geführt ist. Die beiden Steuerkanäle 22, 24 münden beidseitig der Ventilschieberstirnseiten, so daß diese mit dem Druck im jeweiligen Steuerkanal 22, 24, d.h. mit dem Ausgangsdruck des Pilotventils 10 bzw. 12 beaufschlagt sind.

Der Ventilschieber 28 ist desweiteren durch zwei auf die Stirnseiten wirkende Druckfedern 30, 32 in seine dargestellte Nullposition vorgespannt. Die Ventilfedern sind an der Innenbohrung von Verschlußkappen 34 abgestützt, die in das Ventilgehäuse 2 eingeschraubt sind und somit den Axialabschluß der Ventilbohrung 26 bilden. Das andere Ende der Druckfedern 32, 34 liegt jeweils an einem Federteller 36 an, der in der dargestellten Nullstellung mit einem Umfangsabschnitt an einer Gehäuseschulter abgestützt ist.

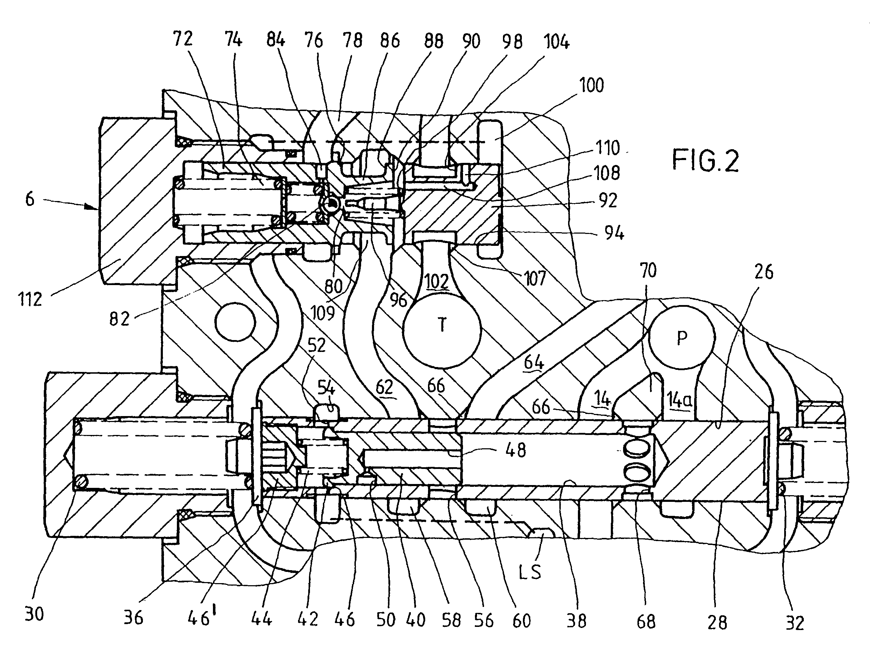

Der Detailaufbau des Wegeventils 4 und einer Rückschlagventilanordnung 6 wird im folgenden anhand Fig. 2 erläutert, die diese Bauelemente in vergrößerter Darstellung zeigt.

In den in Fig. 2 linken Endabschnitt des Ventilschiebers 28 ist eine sacklochförmige Innenbohrung 38 eingebracht, in der ein Druckwaagenkolben 40 axial verschiebbar geführt ist. In der in Fig. 2 gezeigten Nullstellung liegt der Druckwaagenkolben 40 - im folgenden Kolben 40 genannt - mit einem Radialbund 42 an einer Anlageschulter 46 der Innenbohrung 38 an. Der Kolben 40 ist durch eine Steuerfeder 44 in Richtung dieser Anlageposition vorgespannt. Die Steuerfeder 44 ist ihrerseits an einer Abschlußschraube 46' abgestützt, die in den Ringmantel des Ventilschiebers 28 eingeschraubt ist und die gemeinsam mit der Ringmantelstirnfläche die Anlagefläche für den Federteller 36 (links in Fig. 2) bildet. Der Kolben 40 hat eine Verbindungsbohrung mit einer Axial-Sacklochbohrung und einer Radialdrosselbohrung, die am Außenumfang des Kolbens 40 mündet.

Im Bereich des Radialbundes 42 ist im Ringmantel des Ventilschiebers 28 eine Ausgleichsbohrung 52 ausgebildet, die in einen Steuerringraum 54 mündet, der über eine gestrichelt angedeutete Leitung mit einem Steueranschluß LS verbunden ist, so daß im Federraum ein dem Lastdruck entsprechender Steuerdruck anlegbar ist.

Im mittleren Bereich des Ventilschiebers 28 ist ein Ausgangsbohrungsstern 56 ausgebildet, dem zwei Ringräume 58 und 60 zugeordnet sind, die mit Verbindungskanälen 62 bzw. 64 verbunden sind. Diese Verbindungskanäle 62, 64 sind zu Eingangsanschlüssen der Rückschlagventilanordnungen 6 bzw. 8 geführt. Die Ringräume 58, 60 sind mit Anphasungen 66 versehen, die bei einer Axialverschiebung des Ventilschiebers 28 eine Feinaufsteuerung des Ausgangsbohrungssterns 56 ermöglichen. Die Axiallänge des Kolbens 40 ist derart gewählt, daß in der Nullposition (Fig. 2) der Ausgangsbohrungsstern 56 durch den rechten Endabschnitt des Kolbens 40 verschlossen ist. Die Radialdrosselbohrung 50 ist dann durch die Innenumfangswandung der Innenbohrung 38 verschlossen.

Im Bereich des inneren Endabschnitts der Innenbohrung 38 mündet ein Eingangsbohrungsstern 68, der in der Nullstellung durch einen Steg 70 verschlossen ist, der zwischen dem Pumpenkanal 14 und einem Pumpenzweigkanal 14a ausgebildet ist. Die beiden Pumpenkanäle 14, 14a verlaufen etwa in Radialrichtung zur Ventilbohrung 26. Die Innenbohrung 38 ist im Bereich des Steges 70 wiederum mit Anphasungen 66 zur Feinsteuerung versehen.

Durch den Eingangsbohrungsstern 68 und die Pumpenkanäle 14, 14a mit den entsprechenden Ringräumen wird eine verstellbare Meßblende ausgebildet, während durch den Kolben 40 und den Ausgangsbohrungsstern 56 eine Meßdrossel ausgebildet ist, über die der Systemdruck stromabwärts der Meßblende auf den Lastdruck in den Verbindungskanälen 62 bzw. 64 abgedrosselt wird. Durch das Hintereinanderschalten der Meßblende und der Meßdrossel ist gewährleistet, daß der Druckabfall über der Meßblende (Eingangsbohrungsstern 68) unabhängig vom Druck in den Verbindungskanälen 62, 64 konstant bleibt.

Wie bereits eingangs erwähnt sind die Federräume der Druckfedern 30, 32 mit den Steuerkanälen 22 bzw. 24 verbunden, so daß an den Stirnseiten der Steuerdruck herrscht.

Die beiden Rückschlagventilanordnungen 6, 8 haben einen identischen Aufbau, so daß der Einfachheit halber lediglich die in Fig. 2 dargestellte Rückschlagventilanordnung 6 beschrieben wird. Diese hat einen Hauptkegel 72, der über eine Rückschlagfeder 74 mit einem kegelförmigen Abschnitt gegen einen Ventilsitz 76 gedrückt ist, so daß in dieser Schließstellung die Verbindung vom Verbindungskanal 62 zu einem Arbeitskanal 78 unterbrochen ist.

Beim gezeigten Ausführungsbeispiel ist der Hauptkegel 72 mit einer Voröffnung 80 ausgebildet, die mit einer Kugel 82 verschlossen ist, die über die Rückschlagfeder 74 und einen Federteller gegen einen Voröffnungssitz gedrückt wird. In dem Federraum der Rückschlagfeder 74 mündet eine Drosselbohrung 84, die ihrerseits im Arbeitskanal 78 mündet. An dem in Fig. 2 rechten Endabschnitt ist ein nabenförmiger Vorsprung 86 ausgebildet, an dessen Außenumfang eine Ringnut 88 vorgesehen ist. Die Innenbohrung des nabenförmigen Vorsprungs 86 läuft konisch hin zur Voröffnung 80 zu.

Die Ringstirnfläche 90 des Vorsprungs 86 dient als Anlagefläche für einen Aufstoßkolben 92, der koaxial zum Hauptkegel 72 in einer Aufnahmebohrung 94 geführt ist. An seinem zum Hauptkegel 72 benachbarten Endabschnitt hat der Aufstoßkolben 92 einen Stößel 96, der in die Innenbohrung des nabenförmigen Vorsprungs 86 eintaucht und dessen Endabschnitt einen geringeren Durchmesser als die Voröffnung 80 hat, so daß der Stößel 96 auch in diese Voröffnung 80 eintauchen kann. Der Aufstoßkolben 92 ist über eine Feder 98 gegen die Stirnseite eines Ringraumes 100 der Aufnahmebohrung 94 vorgespannt. In dieser Anschlagposition besteht ein vorbestimmter Spalt zwischen der Ringstirnfläche 90 und der benachbarten Stirnfläche des Aufstoßkolbens 92, die größer ist als der Abstand des Endabschnittes des Stößels 96 zum Außenumfang der Kugel 82.

Am Außenumfang des Aufstoßkolbens 92 sind im Bereich eines in der Aufnahmebohrung 94 mündenden Tankkanals 102 mehrere über den Umfang verteilte Ausnehmungen 104 ausgebildet, über die bei einer Axialverschiebung des Aufstoßkolbens 92 der Tankkanal 102 mit dem Arbeitskanal 62 verbindbar ist, der über einen Ringraum 109 in der Aufnahmebohrung 94 mündet.

Im Aufstoßkolben 92 ist desweiteren eine Entlastungsbohrung ausgebildet, deren Axialabschnitt 108 in der - gemäß Fig. 2 - linken Stirnseite mündet und die über einen Radialabschnitt 110 zwischen dem Ringraum 106 des Tankkanals 102 und dem Ringraum 100 mündet (Grundstellung). Der Ringraum 106 des Tankkanals 102 ist wiederum mit Feinsteuerphasen 107 versehen. Der Axialabschnitt 108 mündet radial innerhalb der Ringstirnfläche in die Innenbohrung des Vorsprungs 86.

Wie Fig. 2 weiterhin entnehmbar ist, ist der linke Teil des Hauptkegels 72 in der Innenbohrung eines Verschlußstopfens 112 geführt, der in den linken Endabschnitt der Aufnahmebohrung für das Rückschlagventil eingeschraubt ist. Der Steuerkanal 22 ist von der linken Stirnseite des Ventilschiebers 28 bis in den Bereich des Verschlußstopfens 112 und von dort - wie gestrichelt angedeutet - bis zum Ringraum 100 verlängert, so daß in diesem der vom Pilotventil 10 aufgebrachte Steuerdruck einstellbar ist, der den Aufstoßkolben 92 entgegen der Kraft der Feder 98 beaufschlagt.

Wie aus Fig. 1 entnehmbar ist, ist der Tankkanal 102 zum Ringraum 106 der (rechten) Rückschlagventilanordnung 8 geführt und der Ringraum 100 über den gestrichelt angedeuteten Kanal mit dem Steuerkanal 24 verbunden, so daß der Aufstoßkolben 92 der Rückschlagventilanordnung 8 durch den durch das Pilotventil 12 aufgebrachten Steuerdruck in Richtung zum Hauptkegel 72 beaufschlagt ist, während der Aufstoßkolben 92 der Rückschlagventilanordnung 6 durch das Pilotventil 10 angesteuert wird.

Bei abgehobenem Hauptkegel 72 der Rückschlagventilanordnung 8 wird eine Verbindung zu einem Arbeitskanal 114 aufgesteuert, der zu einem Arbeitsanschluß B der Ventilanordnung geführt ist. Der Arbeitskanal 78 der Rückschlagventilanordnung 6 ist zu einem Arbeitsanschluß A geführt. Die beiden Anschlüsse A, B können an einen Verbraucher, beispielsweise an den Zylinderraum bzw. den Ringraum eines Hubzylinders 116 angeschlossen werden. Der Anschluß kann beispielsweise über Schlauchkupplungen erfolgen.

Zwischen dem Tankkanal 102 und dem Arbeitskanal 114 ist ein Verbindungskanal vorgesehen, in den ein herkömmliches Rückschlagventil 118 geschaltet ist, das bei einem übermäßigen Druckaufbau im Tank T eine Strömung vom Tankkanal 102 zum Arbeitskanal 114 ermöglicht, eine umgekehrte Durchströmung jedoch verhindert.

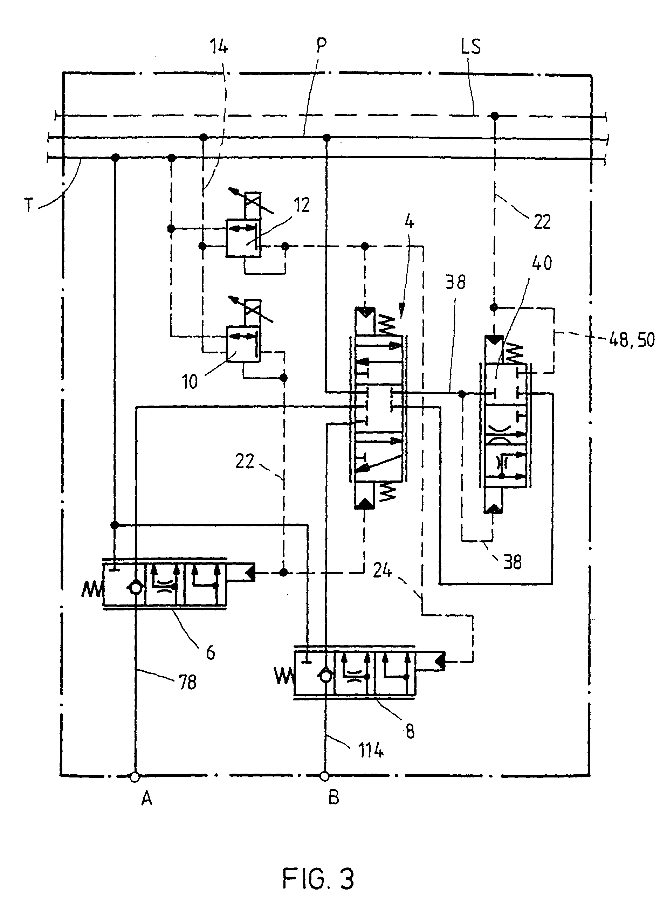

In Fig. 3 ist ein schematischer Hydraulikschaltplan der Ventilanordnung gemäß Fig. 1 dargestellt. Demgemäß werden die Steuerseiten des Wegeventils 4 über die beiden Pilotventile 10, 12 angesteuert, denen desweiteren jeweils eine Rückschlagventilanordnung 6 bzw. 8 zugeordnet ist, auf deren Steuerseite der dem Lastdruck entsprechende Steuerdruck wirkt. Stromabwärts der Meßblende des Wegeventils 4 ist die Druckwaage mit dem Druckwaagenkolben 40 angeordnet, über die der Druckabfall über der Meßblende unabhängig vom Lastdruck konstant gehalten wird. Die Druckwaage ist in Schließrichtung durch die Steuerfeder 44 und den Druck am Steueranschluß LS und in Öffnungsrichtung durch den Druck stromabwärts der Meßblende (Wegeventil 4) beaufschlagt. Durch entsprechende Ansteuerung der Pilotventile 10, 12 und der daraus folgenden Verschiebung des Ventilschiebers des Wegeventils 4 und der Rückschlagventilanordnungen 6, 8 wird - wie im folgenden noch detailliert erläutert - einer der Arbeitsanschlüsse mit Hydraulikfluid versorgt, während der andere Arbeitsanschluß über die Ventilanordnung mit dem Tank T verbunden ist. Falls der Lastdruck stromabwärts des Wegeventils 4 größer ist als der Lastdruck am Steueranschluß LS wird die Druckwaage in die in Fig. 3 obere Position verschoben, so daß dieser höhere Lastdruck in die Lastmeldeleitung eingespeist wird.

Die Funktion der in den Figuren 1 bis 3 dargestellten Ventilanordnung soll im folgenden kurz erläutert werden.

Zum Ausfahren des Hubzylinders 116 muß der Zylinderraum über den Arbeitsanschluß A mit Hydraulikfluid versorgt werden. Dazu wird das Pilotventil 12 bestromt, so daß auf die in Fig. 1 rechte Stirnseite des Ventilschiebers 28 ein Steuerdruck wirkt, der dem Ausgangsdruck des Pilotventils 12 entspricht. Durch diesen Steuerdruck wird der Ventilschieber 28 gegen die Spannung der Druckfeder 30 nach links verschoben, so daß der Eingangsbohrungsstern 68 aufgesteuert und Hydraulikfluid vom Pumpenkanal 14 in die Innenbohrung 38 eintreten kann. Durch den Pumpendruck wird der Kolben 40 von seiner Anschlagposition abgehoben, so daß der Ausgangsbohrungsstern 56 gegen die Kraft der Steuerfeder 44 und den Lastdruck aufgesteuert wird, bis sich ein Gleichgewicht zwischen der Kolbenfederseite und der Vorderseite (rechts in Fig. 1) einstellt. Das Hydraulikfluid kann nun von der Innenbohrung 38 durch den aufgesteuerten Ausgangsbohrungsstern 56 hindurch in den Verbindungskanal 62 eintreten, so daß der Hauptkegel 72 in Öffnungsrichtung - d.h. gegen die Kraft der Rückschlagfeder 74 - beaufschlagt wird. Bei hinreichendem Pumpendruck - oder genauer gesagt Ausgangsdruck an der Druckwaage - wird der Hauptkegel 72 von seinem Ventilsitz abgehoben, so daß das Hydraulikfluid durch den Arbeitskanal 78 zum Anschluß A und von dort in den Zylinderraum des Hubzylinders 116 strömen kann.

Durch den Druckaufbau im Zylinderraum wird Hydraulikfluid aus dem Ringraum des Hubzylinders 116 verdrängt, das über den Anschluß B und den Arbeitskanal 114 zur Rückschlagventilanordnung 8 geführt wird.

Der bei der Bestromung des Pilotventils 12 entstehende Steuerdruck herrscht auch im Ringraum 100 und somit an der Rückseite des Aufstoßkolbens 92, so daß dieser gegen die Kraft der Feder 98 (Fig. 2) in der Darstellung nach Fig. 1 nach rechts bewegt wird. Nach einem vorbestimmten Hub gelangt der Stößel 96 des Aufstoßkolbens 92 in Anlage an die Kugel 82, so daß diese gegen die Vorspannung der Rückschlagfeder 74 von ihrem Sitz abgehoben wird. Der Hauptkegel 72 liegt noch an seinem Sitz an. Durch die Axialbewegung des Aufstoßkolbens 92 wird der Radialabschnitt 110 der Ausgleichsbohrung durch die Steuerkante des Ringraumes 106 aufgesteuert, so daß in der Ausgleichsbohrung und in der Bohrung des Vorsprunges 86 der Tankdruck herrscht.

Da die Drosselbohrung 84 einen wesentlich geringeren Durchmesser als die Voröffnung 80 aufweist, baut sich der Druck im Federraum der Rückschlagfeder 74 ab, da durch die kleine Drosselbohrung 84 nicht schnell genug Hydraulikfluid aus dem Arbeitskanal 114 nachströmen kann. Dadurch wird die Federseite des Hauptkegels 72 entlastet. Aufgrund der Wirkung des Steuerdrucks wird der Aufstoßkolben 92 bei geöffneter Kugel 82 in seine Anschlagposition gegen den Vorsprung des Hauptkegels 72 bewegt, so daß letzterer vom Aufstoßkolben 92 mitgenommen und von seinem Ventilsitz abgehoben wird. In dieser Anschlagstellung liegen die Stirnseite des Aufstoßkolbens 92 und die Ringstirnfläche 90 des Hauptkegels 72 dichtend aneinander, so daß die Innenbohrung des Vorsprunges 86 gegenüber dem Außenumfang abgedichtet ist. Durch die Axialverschiebung des Aufstoßkolbens 92 und des daran anliegenden Hauptkegels 72 wird der Arbeitskanal 114 über die Ringnut 88 mit dem Ringraum 109 verbunden, der wiederum über die Ausnehmungen 104 mit dem Tankkanal 102 verbunden ist, wobei letztere Verbindung durch die Ausnehmungen 104 aufgesteuert wird. Das Hydraulikfluid kann nun vom Arbeitskanal 114 in den Tankkanal 102 und damit zum Tankanschluß T zurückströmen.

Das Ausfahren des Hubzylinders 116 wird beendet, indem das Pilotventil 12 stromlos geschaltet wird, so daß beide Hauptkegel 72 der Rückschlagventilanordnung 6, 8 wieder in ihre Schließposition zurückbewegt werden und das Hydraulikfluid leckölfrei zwischen den Rückschlagventilanordnungen 6, 8 und dem Hubzylinder 116 eingespannt ist.

Zum Einfahren des Hubzylinders 116 wird in umgekehrter Weise das Pilotventil 10 bestromt, so daß der Ventilschieber 28 nach rechts bewegt und der Ringraum des Hubzylinders 116 über den Anschluß B mit Hydraulikfluid versorgt wird, während das Hydraulikfluid im Zylinderraum über den Arbeitsanschluß A und die entsperrte Rückschlagventilanordnung 6 zum Tank T zurückgeführt wird.

Die erfindungsgemäße Ventilanordnung ermöglicht das Einstellen einer Schwimmeinstellung, ohne daß das Wegeventil mit einer sog. vierten Schaltstellung, d.h. einer Endschaltstellung ausgeführt sein muß, die neben der Nullstellung und der Vielzahl von Arbeitsstellungen beim Stand der Technik vorgesehen sein muß.

Bei der erfindungsgemäßen Ventilanordnung werden zum Einstellen der Schwimmstellung, d.h. zum Verbinden der Arbeitsanschlüsse A und B mit dem Tank T beide Pilotventile 10, 12 bestromt, so daß an beiden Steuerseiten des Ventilschiebers 28 der gleiche Steuerdruck anliegt und dieser in seine Nullstellung vorgespannt ist. Es wird kein Hydraulikfluid vom Pumpanschluß P zu den Rückschlagventilanordnungen 6, 8 gefördert. Durch den Steuerdruck in den Steuerkanälen 22 bzw. 24 werden beide Aufstoßkolben 92 in ihre Öffnungsrichtung beaufschlagt, so daß der Hauptkolben 72 in der oben beschriebenen Art und Weise von seinem Ventilsitz abgehoben wird und die Verbindung zwischen den Arbeitskanälen 78 und 114 und dem Tankkanal 102 geöffnet ist. Der Hubzylinder kann nunmehr "von Hand" bewegt werden, da das Hydraulikfluid praktisch widerstandsfrei zirkulieren kann.

Bei den vorbeschriebenen Konstruktionen der Rückschlagventilanordnungen 6, 8 konnte es bei bestimmten Betriebsbedingungen vorkommen, daß der an einem der Anschlüsse A, B herrschende Lastdruck den Aufstoßkolben 92 und den Hauptkegel 72 auseinander gedrückt hatte, so daß keine reguläre Steuerung des Ablaufs möglich war. Der Grund dafür war, daß bei aneinanderliegenden Aufstoßkolben 92 und Hauptkegel 72 in dem Dichtspalt zwischen der Ringfläche 90 des Hauptkegels 72 und der Anlagefläche am Aufstoßkolben 92 sich ein Druck aufbauen kann, der von radial außen nach radial innen vom Lastdruck auf den im Aufnahmeraum für die Feder 98 herrschenden Tankdruck abfällt. Der resultierende mittlere, auf die Ringstirnfläche 90 wirkende Druck kann bei bestimmten Betriebsbedingungen so groß sein, daß er gegen die auf die Aufstoßkolbenrückseite wirkende Kraft die dichtende Anlage zwischen Hauptkegel 72 und Aufstoßkolben 92 aufhebt.

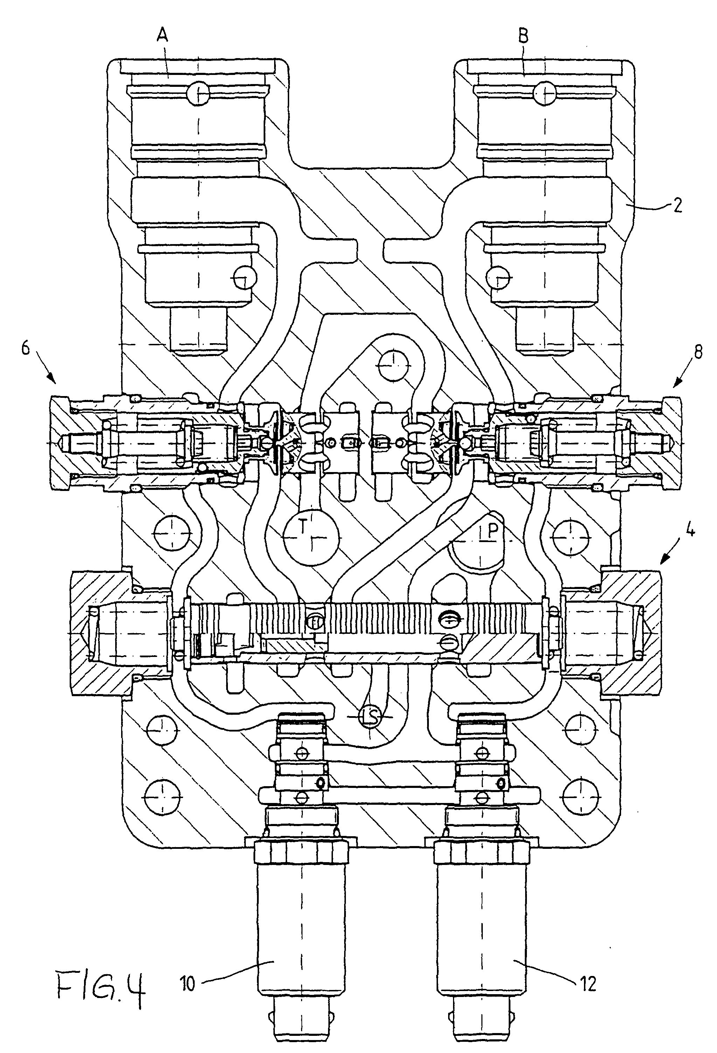

Um diesen Nachteil zu beseitigen wird bei dem in Fig. 4 dargestellten Ausführungsbeispiel eine modifizierte Rückschlagventilanordnung 6, 8 verwendet, bei der durch eine im folgenden ausführlicher beschriebene geometrische Ausgestaltung ein unerwünschtes Abheben des Aufstoßkolbens 92 vom Hauptkegel 72 verhindert werden kann.

Der Grundaufbau des zweiten Ausführungsbeispiels der Ventilanordnung entspricht im wesentlichen dem in Zusammenhang mit Fig. 1 beschriebenen Aufbau. D.h., in das Ventilgehäuse 2 sind zwei Pilotventile 10, 12 eingeschraubt, über die das Wegeventil 4 und die beiden Rückschlagventilanordnungen 6, 8 in der vorbeschriebenen Weise ansteuerbar sind, um den Zulauf und Rücklauf zu und von den den Arbeitsanschlüssen A, B zu steuern. Das Ventilgehäuse 2 ist desweiteren mit einem Tankanschluß T, einem Pumpenanschluß P und einem Steuerölanschluß LS ausgeführt. Abgesehen vom Aufbau der Rückschlagventilanordnungen 6, 8 entspricht die in Fig. 4 dargestellte Ventilanordnung derjenigen aus Fig. 1, so daß im folgenden lediglich auf die Besonderheiten der Rückschlagventilanordnungen 6, 8 eingegangen wird.

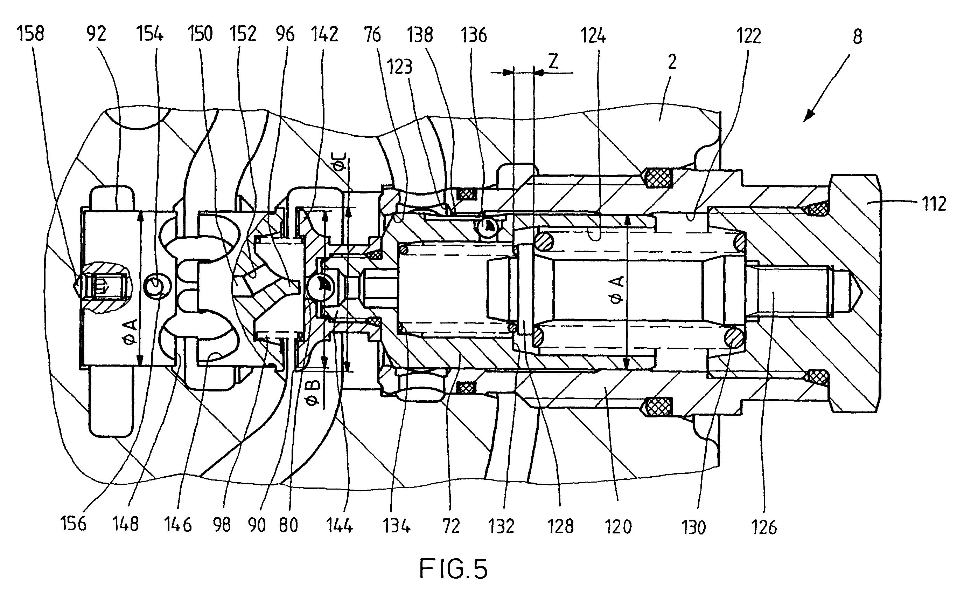

Fig. 5 zeigt die in Fig. 4 rechts angeordnete Rückschlagventilanordnung 8 in vergrößerter Darstellung. Im folgenden werden für einander entsprechende Bauelemente die gleichen Bezugszeichen wie beim Ausführungsbeispiel in Fig. 2 verwendet.

Bei dem in Fig. 5 dargestellten Ausführungsbeispiel ist der Hauptkegel 72 nicht direkt im Ventilgehäuse 2 geführt, sondern in einer Buchse 120, die in eine entsprechende Aufnahmebohrung des Ventilgehäuses 2 eingeschraubt ist. In einer Innenbohrung 122 der Buchse 120 ist der Ventilsitz 76 für den Hauptkegel 72 ausgebildet. Der Durchmesser des Ventilsitzes 76 ist mit A gekennzeichnet. Im Bereich des Ventilsitzes 76 ist eine Radialbohrung 123 in der Buchsenwandung ausgebildet, über die der zum Anschluß B führende Kanal bei abgehobenem Hauptkegel 72 mit dem druckbeaufschlagten Hydraulikfluid versorgbar ist.

In dem in Fig. 5 rechten Endabschnitt der Buchse 120 ist der Verschlußstopfen 112 eingeschraubt, der einen in eine Axialbohrung 124 des tassenförmig ausgebildeten Hauptkegels 72 auskragenden Stützbolzen 126 trägt. Dieser hat an seinem hauptkegelseitigen Endabschnitt einen Federteller 128, an dem ein Endabschnitt einer Steuerfeder 130 anliegt, deren anderes Ende an der Stirnseite des Verschlußstopfens 112 abgestützt ist. Deren Außendurchmesser ist etwas größer als derjenige des Federtellers 128 gewählt, so daß die Steuerfeder 130 radial über den Federteller 128 vorsteht. In der gezeigten Grundposition, d.h. bei geschlossenem Hauptkegel 72 ist in einem Axialabstand Z zur Anlagefläche des Federtellers 128 eine Radialschulter 132 in der Axialbohrung 122 ausgebildet, über die der Hauptkegel 72 nach einer Öffnungsbewegung um das Maß Z in Anlage an die Steuerfeder 130 bringbar ist, so daß die weitere Öffnungsbewegung gegen die Kraft der Steuerfeder 130 erfolgt.

An der von der Steuerfeder 130 entfernten Stirnfläche des Federtellers 128 ist eine Rückschlagfeder 134 abgestützt, die am Boden des Hauptkegels 72 angreift und diesen gegen den Ventilsitz 76 vorspannt. Die Rückschlagfeder 134 ist mit einer flachen Federkennlinie ausgelegt, während die Steuerfeder 130 mit einer steilen Federkennlinie ausgelegt ist.

Im Ringmantel des Hauptkegels 72 ist eine Radialbohrung ausgebildet, die durch ein Rückschlagventilglied 136 verschlossen ist, das eine Fluidströmung vom Hauptkegelinnenraum zur Buchsen-Radialbohrung 123 ermöglicht. Der Außenumfang des Hauptkegels 72 ist im Bereich des Rückschlagventilglieds 136 etwas zurückgestuft, so daß ein Drosselspalt 138 gebildet wird.

Bei dem in Fig. 2 dargestellten Ausführungsbeispiel war der nabenförmige Vorsprung 86 einstückig mit dem Hauptkegel 72 ausgebildet. Bei dem in Fig. 5 gezeigten Ausführungsbeispiel ist ein Anlageteil 142 auf einen Axialvorsprung 144 des Hauptkegels 72 aufgeschraubt, wobei die am Aufstoßkolben 92 dichtend anliegende Ringstirnfläche 90 an der Stirnseite des Anlageteils 42 ausgebildet ist. Letzteres ist zu seiner Stirnfläche hin radial erweitert, so daß der Innendurchmesser der Ringstirnfläche 90 ein Maß B aufweist, das größer ist als der Sitzdurchmesser A. Entsprechend ist der Außendurchmesser C selbstverständlich ebenfalls größer als der Sitzdurchmesser A. Mit einfachen Worten gesagt, das Anlageteil 142 ist im Bereich seiner Stirnfläche in Radialrichtung über den Durchmesser des Hauptkegels 72 hinaus vergrößert.

Das Anlageteil 142 hat eine Axialbohrung, die die Voröffnung 80 bildet. Diese ist - wie beim vorbeschriebenen Ausführungsbeispiel - mit einer Pilot-Kugel 80 verschließbar, die eine Hydraulikölströmung in den Federraum des Hauptkegels 72 zuläßt, jedoch in umgekehrter Richtung unterbindet. Bei dem in Fig. 5 dargestellten Ausführungsbeispiel ist die Kugel 80 nicht durch Federvorspannung, sondern lediglich hydraulisch gegen den Ventilsitz in der Voröffnung 80 vorgespannt. Die Verbindung zwischen der Voröffnung 80 und dem Federraum des Hauptkegels 72 erfolgt über eine Axialbohrung im Axialvorsprung 144.

Die Kugel 80 kann von dem Stößel 96 des Aufstoßkolbens 92 vom Voröffnungssitz abgehoben werden. Der Aufstoßkolben 92 wird über die Feder 98 in die gezeigte Grundstellung vorgespannt.

Bei dem in Fig. 2 beschriebenen Ausführungsbeispiel gelangt das ablaufende Hydraulikfluid bei geöffnetem Hauptkegel 72 über flache Ausnehmungen 104 am Außenumfang des Aufstoßkolbens 92 zum Tankanschluß T.

Um den Strömungsquerschnitt zu erhöhen und damit den Energieverlust zu minimieren, sind die flachen Ausnehmungen 104 beim gezeigten Ausführungsbeispiel durch Radialausnehmungen 146 mit vergleichsweise großem Querschnitt ersetzt, die durch eine umlaufende Ringnut 148 miteinander verbunden sind. Durch diese Ausgestaltung wird der Strömungswiderstand beim Ablauf wesentlich verringert.

Der Druck im Federraum des Hauptkegels 72 wird bei abgehobener Kugel 80 über eine zentrische Entlastungsbohrung 150 zum Tank T hin entlastet, die einerseits über eine Schrägbohrung 152 im Bereich des Stößels 96 mündet und sich andererseits bis zu einer oder mehreren Querbohrungen 154 erstreckt, die außerhalb der Radialausnehmungen 146 verlaufen und in länglichen Nuten 156 oder sonstigen Ausnehmungen am Außenumfang des Aufstoßkolbens 92 münden. Durch die Axialbewegung des Aufstoßkolbens 92 werden die Nuten 156 aufgesteuert, so daß der Federraum des Hauptkegels 72 druckentlastet werden kann.

Durch die radiale Erweiterung des Anlageteils 142 über den Sitzdurchmesser A hinaus wird der Hauptkegel 72 während der Ablaufregelung durch den resultierenden Fluiddruck stets in Richtung seiner Anlageposition an den Aufstoßkolben 92 beaufschlagt, so daß eine Auseinanderbewegung dieser Bauteile - wie es beispielsweise beim vorbeschriebenen Ausführungsbeispiel möglich ist - nicht vorkommen kann. Aufgrund des großen Durchmessers des Aufstoßkolbens 72 und des Anlageteils 142 muß der Ventilsitz 76 in der Buchse 120 ausgebildet werden, da sonst ein Montieren des Aufstoßkolbens 72 an der rechten Seite her nicht möglich wäre. Bei dem gezeigten Ausführungsbeispiel wird der Aufstoßkolben 72 in der Buchse 120 vormontiert und dann in das Ventilgehäuse 2 eingeschraubt.

Durch die geometrische Ausgestaltung eines Anlageabschnitts des Hauptkegels 72 an den Aufstoßkolben 92 wird sichergestellt, daß innerhalb des Durchmessers A kein Druck vorhanden ist, der den Aufstoßkolben 92 und den Hauptkegel 72 auseinander drücken könnte. Der Lastdruck am Anschluß B hält bei dieser Variante sogar den Aufstoßkolben 92 und den Hauptkegel 72 zusammen, da der resultierende Druck an den Ringflächen zwischen den Durchmessern C und A in Richtung "Zusammenhalten" wirkt. In Richtung "Auseinanderdrücken" wirkt zwischen den Durchmessern C und B ein Druck in der Dichtfläche, der vom Durchmesser C zum Durchmesser B vom Lastdruck auf Tankdruck abfällt.

An der Rückseite des Aufstoßkolbens 92 (links in Fig. 5) ist ein Anschlagteil 158 ausgebildet, das dafür sorgt, daß die Stirnfläche des Aufstoßkolbens 92 stets in einem geringen Abstand zur Ventilgehäusestirnfläche angeordnet ist.

In der Rückschlagfunktion wird der Hauptkegel 72 gegen die Kraft der schwachen Rückschlagfeder 134 vom Ventilsitz 76 abgehoben, so daß der Arbeitsanschluß B mit Hydraulikfluid versorgbar ist. Der Abstand Z ist derart gewählt, daß in der Rückschlagfunktion die Steuerfeder 130 keine Wirkung entfaltet.

Bei der Ablaufregelung wird die Rückseite des Aufstoßkolbens 92 mit einem Steuerdruck beaufschlagt, so daß dieser in der Darstellung nach Fig. 5 nach rechts bewegt wird und die Kugel 80 von ihrem Voröffnungssitz abhebt. Der Federraum des Hauptkegels 72 kann dann bei geschlossenem Rückschlagventilglied 136 über die Schrägbohrung 152, die Entlastungsbohrung 150, die Querbohrung 154 und die Nut 156 zum Tank T hin entlastet werden. Anschließend läuft der Aufstoßkolben 92 auf den Hauptkegel 72 auf, so daß beide Bauelemente dichtend aneinander liegen. Der druckentlastete Hauptkegel 72 wird dann von seinem Ventilsitz 76 abgehoben, wobei diese Abhebebewegung zunächst gegen die Kraft der schwachen Rückschlagfeder 134 erfolgt. In diesem Betriebszustand ist die Verbindung zum Tankanschluß T über die Ausnehmungen 146 und die Ringnut 158 noch nicht aufgesteuert.

Dieses Aufsteuern erfolgt erst, nachdem der Hauptkegel 72 eine dem Maß Z entsprechende Öffnungsbewegung durchgeführt hat und somit die Radialschulter 132 in Anlage an die Steuerfeder 130 gelangt. D.h., das weitere Auf steuern des Hauptkegels 72 erfolgt gegen die Kraft der stärkeren Steuerfeder 130, die mit einer vergleichsweise großen Federkonstante ausgelegt ist. Das Aufsteuern der Verbindung zwischen dem Arbeitsanschluß B und dem Tankanschluß über die Ausnehmung 146 und die Ringnut 148 erfolgt somit im wesentlichen in Abhängigkeit von der Steuerfeder 130, die in opitmaler Weise an diese Regelaufgabe angepaßt ist. Während dieser Ablaufsteuerung ist durch das radial vorspringende Anlageteil 142 stets gewährleistet, daß die dichtende Anlage des Hauptkegels 72 an den Aufstoßkolben 92 erhalten bleibt, so daß die Ablaufsteuerung in der gewünschten Weise durchgeführt werden kann.

Durch diese Variante läßt sich gegenüber der im Zusammenhang mit Fig. 2 beschriebenen Ausführung die Betriebssicherheit nochmals wesentlich erhöhen, so daß auch bei ungünstigsten Betriebsbedingungen eine zuverlässige Ablaufsteuerung durchgeführt werden kann.

Der erfindungsgemäße Aufbau der Ventilanordnung ermöglicht es, eine Vielzahl von Varianten mit dem gleichen Ventilgehäuse 2 auszuführen, da die wesentlichen Funktionselemente sämtlich als Einbauelemente ausgeführt sind, ohne daß Änderungen der Kanäle, Anschlüsse etc. erforderlich sind.

Offenbart sind eine Rückschlagventilanordnung und eine Ventilanordnung, in der eine derartige Rückschlagventil-anordnung verwendet wird, bei der ein Aufstoßkolben in Anlage an einen Hauptkegel bringbar ist, um diesen von seinem Ventilsitz abzuheben. Der Hauptkegel ist ohne Flächendifferenz ausgeführt und der Aufstoßkolben über ein Pilotventil angesteuert, so daß der Abhebevorgang des Hauptkegels vom Ventilsitz steuerbar ist.

Die erfindungsgemäße Ausgestaltung der Rückschlagventilanordnung ermöglicht die Steuerung der Zulauf- und Ablaufdrosselung für den Verbraucher, Dabei können die Zulauf- und Ablaufdrosselung für Motor- und Zylinderbetrieb unterschiedlich eingestellt werden. Durch Vermeiden (Abschalten) der Ablaufdrosselung kann der Drosselverlust am Ventil etwa halbiert werden. Dazu wird zunächst eine Steuerdruckdifferenz am Ventilschieber des Wegeventils erzeugt und anschließend beide Steuerdrücke durch entsprechende Ansteuerung der Pilotventile unter Beibehaltung der Druckdifferenz (am Ventilschieber) hochgefahren. Dabei verbleibt der Ventilschieber in seiner voreingestellten Position und das Ablauf-Sperrventil (Rückschlagventilanordnung 6 oder 8) wird vollständig aufgesteuert. Die Erzeugung der Druckdifferenz und das parallele Hochfahren der Steuerdrücke wird vorteilhafterweise durch Betätigung eines Hebels oder Schalters in Gang gesetzt und durch eine zugeordnete elektrische Steuereinheit gesteuert.

Der Voranmeldung DE 197 07 722 sind weitere Ausführungen zur Zu- und Ablaufsteuerung zu entnehmen.

## Patentansprüche

1. Rückschlagventilanordnung in Sitzbauweise mit einem mit Voröffnung ausgeführten, gegen einen Ventilsitz (76) vorgespannten Hauptkegel (72), der von dem Ventilsitz (76) abhebbar ist, um einen vom Ringspalt zwischen dem Ventilsitz (76) und dem Außendurchmesser des Hauptkegels (72) bestimmten Öffnungsquerschnitt aufzusteuern, wobei ein Voröffnungsschließkörper (82) des Hauptkegels (72) mittels eines Aufstoßkolbens (92) in seine Öffnungsstellung bringbar ist,
**dadurch gekennzeichnet, daß**
der Aufstoßkolben (92) zum Entsperren in Anlage an den Hauptkegel (72) bringbar ist, so daß der Öffnungshub durch den Hub des Aufstoßkolbens (92) bestimmt ist, und daß der Durchmesser des Ventilsitzes 876) etwa gleich dem sitzseitigen Hauptkegeldurchmesser ist, so daß die in Öffnungsrichtung wirksame Differenzfläche am abgehobenen Hauptkegel (72) minimal ist.

2. Rückschlagventilanordnung nach Patentanspruch 1, **dadurch gekennzeichnet, daß** der Hauptkegel (72) durch eine Rückschlagfeder (134) gegen den Ventilsitz (76) vorgespannt ist, der eine Steuerfeder (130) zugeordnet ist, die nach einem vorbestimmten Öffnungshub (Z) des Hauptkegels (72) mit diesem in Wirkeingriff gelangt, wobei die Federkonstante der Steuerfeder (130) größer als die Federkonstante der Rückschlagfeder (134) ist.

3. Rückschlagventilanordnung nach Patentanspruch 2, **dadurch gekennzeichnet, daß** die Steuerfeder (130) an einem gehäuseseitigen Federteller (128) abgestützt ist und daß diesem abgestützten Ende der Steuerfeder (130) eine Innenringfläche (132) des Hauptkegels (72) zugeordnet ist, die nach einem vorbestimmten Hub (Z) des Hauptkegels (72) auf die Steuerfeder (130) aufläuft.

4. Rückschlagventilanordnung nach einem der vorhergehenden Ansprüche, **gekennzeichnet durch** eine Verbindungsbohrung (108, 110) des Aufstoßkolbens (92), die zur Verbindung der Voröffnung (80) mit einem Tankanschluß (T) während des Hubs des Aufstoßkolbens (92) aufsteuerbar ist.

5. Rückschlagventilanordnung nach Anspruch 4, **dadurch gekennzeichnet, daß** der Hauptkegel (72) am aufstoßkolbenseitigen Endabschnitt einen nabenförmigen Vorsprung (86) hat, in dessen Innenstirnfläche die Voröffnung (80) mündet und dessen Ringstirnfläche (90) eine dichtende Anlagefläche für den Aufstoßkolben (92) ist, der mit einem Stößel (96) in die Nabenbohrung eintaucht.

6. Rückschlagventilanordnung nach Patentanspruch 5, **dadurch gekennzeichnet, daß** der Innendurchmesser (B) der Ringstirnfläche (90) zumindest gleich dem Durchmesser (A) des Hauptkegelsitzes (76) ist.

7. Rückschlagventilanordnung nach Patentanspruch 6 **dadurch gekennzeichnet, daß** der Hauptkegelsitz (76) an einer Buchse (120) ausgebildet ist, deren Außendurchmesser größer als der Außendurchmesser (C) der Ringstirnfläche (90) ist.

8. Rückschlagventilanordnung nach einem der Ansprüche 5-7, **dadurch gekennzeichnet, daß** die Verbindungsbohrung (108, 110) in der Nabenbohrung des Vorsprungs (86) mündet.

9. Rückschlagventilanordnung nach einem der vorhergehenden Ansprüche, **dadurch gekennzeichnet, daß** der Aufstoßkolben (92) am Außenumfang mehrere am Umfang verteilte Ausnehmungen (104) hat, über die bei Ansteuerung des Aufstoßkolbens (92) ein Raum stromabwärts des Hauptkegelsitzes mit einem Tankkanal (102) verbindbar ist.

10. Rückschlagventilanordnung nach einem der vorhergehenden Ansprüche, **dadurch gekennzeichnet, daß** der Aufstoßkolben (92) hydraulisch angesteuert ist.

11. Rückschlagventilanordnung nach einem der Ansprüche 5 bis 10, **dadurch gekennzeichnet, daß** der Aufstoßkolben (92) durch eine Feder (98) gegen einen Anschlag derart vorgespannt ist, daß ein Spalt zwischen der Anlagefläche (90) und der benachbarten Stirnfläche des Aufstoßkolbens (92) größer ist als der Abstand zwischen dem Stößel (80) und dem Außenumfang des Verschlußkörpers (82).

12. Ventilanordnung mit einem Wegeventil, über das ein Pumpenanschluß (P) mit einer zu einem Verbraucher (116) führenden Arbeitsleitung (78, 114) verbindbar ist, in die eine Rückschlagventilanordnung (6, 8) gemäß einem der vorhergehenden Patentansprüche geschaltet ist, über die die Arbeitsleitung (78, 114) mit einem Tankanschluß T verbindbar ist.

13. Ventilanordnung nach Anspruch 12, **dadurch gekennzeichnet, daß** der Aufstoßkolben durch ein elektrisch betätigtes Pilotventil (10, 12) vorgesteuert ist.

14. Ventilanordnung nach Anspruch 12 oder 13 zur Ansteuerung eines doppelt wirkenden Verbrauchers (116), mit einem Wegeventil (4), das zwei Ausgangsanschlüsse (62, 64) hat, denen jeweils eine Rückschlagventilanordnung (6, 8) nach einem der Ansprüche 1 bis 7 zugeordnet ist, wobei jeder Aufstoßkolben (92) über ein Pilotventil (10, 12) ansteuerbar ist, dessen Ausgangsdruck über einen Steuerkanal (22, 24) zu einer Stirnseite des Wegeventilschiebers (28) geführt ist, so daß das Wegeventil (4) in eine Stellung bringbar ist, in der ein Arbeitsanschluß (A, B) mit dem Pumpenanschluß P und der andere Arbeitsanschluß (A, B) über diejenige Rückschlagventilanordnung (6, 8) mit dem Tank T verbindbar ist, die mit dem gleichen Steuerdruck wie der Wegeventilschieber (28) beaufschlagt ist.

15. Ventilanordnung nach einem der Ansprüche 12 bis 14, **dadurch gekennzeichnet, daß** das Pilotventil ein Druckminderventil (10, 12) in Patronenbauweise ist.

16. Ventilanordnung nach einem der Ansprüche 12 bis 15, **gekennzeichnet durch** ein Rückschlagventil (118), das in einer Verbindungsleitung zwischen dem Tankanschluß T und dem Arbeitsanschluß B geschaltet ist.

17. Ventilanordnung nach einem der Ansprüche 12 bis 16, **dadurch gekennzeichnet, daß** das Wegeventil ein stetig verstellbares Wegeventil (4) ist, das eine veränderbare Meßblende (68, 66) hat, der eine Individual-Druckwaage (40, 56) nachgeschaltet ist.

## Claims

1. Check valve assembly in seat design, including a main poppet (72) which is equipped with a preopening and biased against a valve seat (76) and may be raised from said valve seat (76) so as to control open an open cross-section determined by the ring gap between said valve seat (76) and the external diameter of said main poppet (72), wherein a preopening closing body (82) of said main poppet (72) may be taken into its opening position by means of a topping piston (92),
**characterized in that**
said topping piston (92) is adapted be taken into contact with said main poppet (72) for unlocking, so that the opening stroke is determined by the stroke of said topping piston (92), and that the diameter of said valve seat (76) is approximately equal to the seat-side main poppet diameter, so that the differential area on the raised main poppet (72) that is effective in the opening direction is minimum.

2. Check valve assembly in accordance with claim 1, **characterized in that** said main poppet (72) is biased against said valve seat (76) by a check spring (134) to which a control spring (130) is associated which, following a predetermined opening stroke (Z) of said main poppet (72), enters into operative engagement with the latter, the spring constant of said control spring (130) being greater than the spring constant of said check spring (134).

3. Check valve assembly in accordance with claim 2, **characterized in that** said control spring (130) is supported on a housing-side spring cup (128), and **in that** to this supported end of said control spring (130) an inner ring surface (132) of said main poppet (72) is associated which, following a predetermined stroke (Z) of said main poppet (72), contacts said control spring (130).

4. Check valve assembly in accordance with any one of the preceding claims, **characterized by** a connecting bore (108, 110) of said topping piston (92) which may be controlled open for connecting said preopening (80) with a tank port (T) during the stroke of said topping piston (92).

5. Check valve assembly in accordance with claim 4, **characterized in that** said main poppet (72) at the topping piston-side end section has a hub-shaped projection (86) into the inner end surface of which said preopening (80) opens, and the annular end surface (90) of which is a sealing contact surface for said topping piston (92) which plunges into the hub bore with a plunger (96).

6. Check valve assembly in accordance with claim 5, **characterized in that** the internal diameter (B) of said annular end surface (90) is at least equal to the diameter (A) of said main poppet seat (76).

7. Check valve assembly in accordance with claim 6, **characterized in that** said main poppet seat (76) is formed at a bush (120) the external diameter of which is greater than the external diameter (C) of said annular end surface (90).

8. Check valve assembly in accordance with any one of claims 5 - 7, **characterized in that** said connecting bore (108, 110) opens into the hub bore of said projection (86).

9. Check valve assembly in accordance with any one of the preceding claims, **characterized in that** topping piston (92) at the external circumference includes several recesses (104) distributed on the circumference, through which a space downstream of said main poppet seat may be connected with a tank passage (102) when said topping piston (92) is actuated.

10. Check valve assembly in accordance with any one of the preceding claims, **characterized in that** said topping piston (92) is controlled hydraulically.

11. Check valve assembly in accordance with any one of claims 5 - 10, **characterized in that** said topping piston (92) is biased against a stop by a spring (98) such that a gap between said contact surface (90) and the adjacent end surface of said topping piston (92) is greater than the distance between said plunger (80) and the external circumference of said closing body (82).

12. Valve assembly including a directional control valve through which a pump port (P) may be connected with a work line (78, 114) leading to a consumer (116), in which a check valve assembly (6, 8) in accordance with any one of the preceding claims is mounted whereby said work line (78, 114) may be connected with a tank port T.

13. Valve assembly in accordance with claim 12, **characterized in that** said topping piston is piloted by an electrically actuated pilot valve (10, 12).

14. Valve assembly in accordance with claim 12 or 13 for controlling a double-action consumer (116), including a directional control valve (4) having two output ports (62, 64) to each of which one check valve assembly (6, 8) in accordance with any one of claims 1 to 7 is associated, with each topping piston (92) being controllable via a pilot valve (10, 12) the output pressure of which is conveyed to an end side of said directional control valve spool (28), so that said directional control valve (4) may be taken into a position in which a work port (A, B) may be connected with said pump port P, and the other work port (A, B) may be connected with the tank T via the one check valve assembly (6, 8) subjected to the same control pressure as said directional control valve spool (28).

15. Valve assembly in accordance with any one of claims 12 to 14, **characterized in that** said pilot valve is a pressure reduction valve (10, 12) in cartridge design.

16. Valve assembly in accordance with any one of claims 12 to 15, **characterized by** a check valve (118) mounted in a connecting line between said tank port T and said work port B.

17. Valve assembly in accordance with any one of claims 12 to 16, **characterized in that** said directional control valve is a continuously adjustable directional control valve (4) including a variable measuring orifice (68, 66), downstream of which an individual pressure balance (40, 56) is mounted.

## Revendications

1. Dispositif à clapet de non-retour dans une réalisation à siège comportant un cône principal (72) réalisé avec ouverture avancée et précontraint contre un siège de soupape (76), lequel cône principal peut être soulevé du siège de soupape (76) pour commander une section d'ouverture déterminée par la fente annulaire entre le siège de soupape (76) et le diamètre extérieur du cône principal (72), un corps de fermeture d'ouverture (82) du corps principal (72) pouvant être amené dans une position d'ouverture, au moyen d'un piston de refoulement (92), **caractérisé en ce que** le piston de refoulement (92) peut être amené en application contre le cône principal (72), pour le déverrouillage, ce qui fait que la course d'ouverture est déterminée par la course du piston de refoulement (92), et **en ce que** le diamètre du siège de soupape (76) est approximativement égal au diamètre du cône principal côté siège, ce qui fait que la surface différentielle, qui agit dans le sens d'ouverture, est minimale au droit du cône principal (72) soulevé.

2. Dispositif à clapet de non-retour selon la revendication 1, **caractérisé en ce que** le cône principal (72) est précontraint contre le siège de soupape (76) par un ressort de rappel (134) auquel est associé un ressort de commande (130) qui, après une course d'ouverture (Z) prédéterminée du cône principal (72), parvient en engagement actif avec celui-ci, la constante du ressort de commande (130) étant supérieure à la constante du ressort de rappel (134).

3. Dispositif à clapet de non-retour selon la revendication 2, **caractérisé en ce que** le ressort de commande (130) prend appui contre une coupelle de ressort (128) côté boîtier, et **en ce qu'**à cette extrémité soutenue du ressort de commande (130) est associée une surface annulaire intérieure (132) du cône principal (72) qui, après une course (Z) prédéterminée du cône principal (72), passe sur le ressort de commande (130).

4. Dispositif à clapet de non-retour selon l'une des revendications précédentes, **caractérisé par** un trou de liaison (108, 110) du piston de refoulement (92), qui peut être commandé pour la liaison de l'ouverture avancée (80) avec un raccord de réservoir (T) pendant la course du piston de refoulement (92).

5. Dispositif à clapet de non-retour selon la revendication 4, **caractérisé en ce que** le cône principal (72) présente, dans la portion terminale côté piston de refoulement, une saillie (86) en forme de moyeu dans la surface frontale intérieure de laquelle débouche l'ouverture avancée (80) et dont la surface frontale annulaire (90) est une surface d'application étanche pour le piston de refoulement (92) qui pénètre, par un poussoir (96), dans le trou de moyeu.

6. Dispositif à clapet de non-retour selon la revendication 5, **caractérisé en ce que** le diamètre intérieur (B) de la surface frontale annulaire (90) est au moins égal au diamètre (A) du siège (76) du cône principal.

7. Dispositif à clapet de non-retour selon la revendication 6, **caractérisé en ce que** le siège (76) du cône principal est formé sur une douille (120) dont le diamètre extérieur est supérieur au diamètre extérieur (C) de la surface frontale annulaire (90).

8. Dispositif à clapet de non-retour selon l'une des revendications 5 à 7, **caractérisé en ce que** le trou de liaison (108, 110) débouche dans le trou de moyeu de la saillie (86).

9. Dispositif à clapet de non-retour selon l'une des revendications précédentes, **caractérisé en ce que** le piston de refoulement (92) présente, sur son pourtour extérieur, plusieurs évidements (104) répartis sur le pourtour par lesquels un espace situé en aval du siège du cône principal peut être relié à un canal de réservoir (102), lors de la commande du piston de refoulement (92).

10. Dispositif à clapet de non-retour selon l'une des revendications précédentes, **caractérisé en ce que** le piston de refoulement (92) est commandé hydrauliquement.

11. Dispositif à clapet de non-retour selon l'une des revendications 5 à 10, **caractérisé en ce que** le piston de refoulement (92) est précontraint par un ressort (98) contre une butée de manière qu'une fente située entre la surface d'application (90) et la surface frontale voisine du piston de refoulement (92), soit supérieure à la distance entre le poussoir (80) et le pourtour extérieur du corps de fermeture (82).

12. Dispositif à soupape comportant une soupape de distribution, par laquelle un raccord de pompe (P) peut être relié à une conduite de travail (78, 114), qui mène à un récepteur (116), conduite dans laquelle est monté un dispositif à clapet de non-retour (6, 8) selon l'une des revendications précédentes, par lequel la conduite de travail (78, 114) peut être reliée à un raccord de réservoir (T).

13. Dispositif à soupape selon la revendication 12, **caractérisé en ce que** le piston de refoulement est commandé de manière pilote par une soupape pilote (10, 12) actionnée électriquement.

14. Dispositif à soupape selon la revendication 12 ou 13, pour la commande d'un récepteur (116) à double effet, comportant une soupape de distribution (4) qui possède deux raccords de sortie (62, 64) à chacun desquels est associé un dispositif à clapet de non-retour (6, 8) selon l'une des revendications 1 à 7, chaque piston de refoulement (92) pouvant être commandé par une soupape pilote (10, 12) dont la pression de sortie est guidée, à travers un canal de commande (22, 24), vers un côté frontal de l'obturateur (28) de la soupape de distribution, ce qui fait que la soupape de distribution (4) peut être amenée dans une position dans laquelle, le raccord de travail (A, B) peut être relié au raccord de pompe (P) et l'autre raccord de travail (A, B) peut être relié au réservoir (T), par le dispositif à clapet de non-retour (6, 8) qui reçoit la même pression de commande que l'obturateur (28) de la soupape de distribution.

15. Dispositif à soupape selon l'une des revendications 12 à 14, **caractérisé en ce que** la soupape pilote est une soupape de réduction de pression (10, 12) dans une construction à cartouche.

16. Dispositif à soupape selon l'une des revendications 12 à 15, **caractérisé par** un clapet de non-retour (118) qui est monté dans une conduite de liaison entre le raccord de réservoir (T) et le raccord de travail (B).

17. Dispositif à soupape selon l'une des revendications 12 à 16, **caractérisé en ce que** la soupape de distribution est une soupape de distribution (4) réglable en continu qui possède un diaphragme de mesure (68, 66) variable en aval duquel est montée une balance de pression individuelle (40, 55).
